# FASCICULE DE BREVET EUROPEEN

(11) **EP 2 637 986 B1**
(45) Date de publication et mention de la délivrance du brevet: **29.05.2019**
(21) Numéro de dépôt: 11794543.6
(22) Date de dépôt: 10.11.2011
(51) Int. Cl.: C04B 35/636, C04B 35/83, F16D 69/02

(54) **PROCEDE DE FABRICATION D'UNE PIECE DE FRICTION A BASE DE MATERIAU COMPOSITE C/C.**
VERFAHREN ZUR HERSTELLUNG EINES REIBUNGSTEILS MIT EINEM C/C-VERBUNDSTOFF
METHOD FOR THE PRODUCTION OF A FRICTION PART COMPRISING A C/C COMPOSITE MATERIAL

(30) Priorité: 10.11.2010 FR 1059278
(43) Date de publication de la demande: 18.09.2013
(73) Titulaire: Safran Landing Systems, 78140 Vélizy-Villacoublay (FR)
(72) Inventeur: JACQUEMARD, Pascale, F-69780 Saint Pierre De Chandieu (FR); BAUD, Sandrine, F-69006 Lyon (FR); PAILLER, René, F-33610 Cestas (FR); FONTAINE, Florian, F-33520 Bruges (FR)
(74) Mandataire: Delumeau, François Guy
(86) Numéro de dépôt international: PCT/FR2011/052616
(87) Numéro de publication internationale: WO 2012/063003

(56) Documents cités:
- EP-A1- 2 146 110
- WO-A1-2006/067184
- FR-A1- 2 889 186
- US-A- 5 962 135

## Description

### Arrière-plan de l'invention

L'invention concerne des pièces de friction à base de matériau composite carbone/carbone (C/C), en particulier des disques de freins d'avions.

Des disques de freins d'avions en matériau composite C/C sont largement utilisés. La fabrication de tels disques comporte habituellement une étape de réalisation d'une préforme fibreuse en fibres de carbone ayant une forme voisine de celle d'un disque à fabriquer et destinée à constituer le renfort fibreux du matériau composite, et la densification de la préforme par une matrice en carbone.

Un procédé bien connu pour la réalisation d'une préforme fibreuse en fibres de carbone comprend la superposition de strates fibreuses en fibres de précurseur de carbone, par exemple en polyacrylonitrile (PAN) préoxydé, la liaison des strates entre elles, par exemple par aiguilletage, et la réalisation d'un traitement thermique de carbonisation pour transformer le précurseur en carbone. On pourra se référer, entre autres, au document US 5 792 715.

La densification de la préforme par une matrice carbone peut être effectuée par infiltration chimique en phase gazeuse ou CVI ("Chemical Vapour Infiltration"). Des préformes sont placées dans une enceinte dans laquelle est admise une phase gazeuse contenant un ou plusieurs précurseurs de carbone, par exemple du méthane et/ou du propane. La température et la pression dans l'enceinte sont contrôlées pour permettre à la phase gazeuse de diffuser au sein des préformes et d'y former un dépôt solide de carbone pyrolytique (PyC) par décomposition du ou des précurseurs. Un procédé de densification d'une pluralité de préformes annulaires de disques de frein disposées en piles est décrit, entre autres, dans le document US 5 904 957.

La densification par une matrice carbone peut aussi être effectuée par voie liquide, c'est-à-dire par imprégnation de la préforme par un précurseur de carbone, typiquement une résine, et pyrolyse du précurseur, plusieurs cycles d'imprégnation et pyrolyse étant habituellement réalisés.

On connaît aussi un procédé de densification dit par "caléfaction" selon lequel une préforme de disque à densifier est immergée dans un bain de précurseur de carbone, par exemple du toluène, et est chauffée, par exemple par couplage avec un inducteur, de sorte que le précurseur vaporisé au contact de la préforme diffuse au sein de celle-ci pour former un dépôt PyC par décomposition. Un tel procédé est décrit entre autres dans le document US 5 389 152.

Parmi les différentes propriétés recherchées de disques de frein à base de matériau composite C/C, une faible usure est hautement désirable.

Pour améliorer la résistance à l'usure, l'introduction de particules en céramique dans le matériau composite C/C a été largement proposée.

Ainsi, dans le document US 6 376 431, il est décrit l'imprégnation d'une préforme en fibres de carbone par une solution type sol-gel contenant un précurseur de silice (SiO₂) qui, après traitement thermique et réaction chimique avec le carbone, laisse des particules de carbure de silicium (SiC) distribués dans la préforme, ces particules ne représentant, dans le matériau composite C/C final, pas plus de 1 % en masse.

Le document WO 2006/067184 préconise de réaliser une imprégnation par une solution type sol-gel ou suspension colloïdale sur la texture fibreuse en carbone des strates utilisées pour réaliser la préforme afin d'obtenir une dispersion de grains d'oxydes tels que des oxydes de titane (TiO₂), de zirconium (ZrO₂), d'hafnium (HfO₂) et de silicium (SiO₂). Un traitement thermique ultérieur transforme ces grains d'oxyde en grains de carbure par réaction avec le carbone des fibres. Des essais effectués avec des grains de carbure de silicium montrent une diminution de l'usure à haute température en comparaison avec des matériaux composite C/C obtenus sans introduction de grains de céramique. Toutefois, l'usure à basse température est sensiblement plus élevée. Or, dans le cas de disques de frein d'avion, il a été noté que l'usure se produit principalement lors des freinages de taxiage à froid, sur le trajet entre le point de stationnement et la piste de décollage. En outre, la transformation en carbure consomme du carbone des fibres du renfort.

Le document EP 1 748 036 décrit l'imprégnation d'un substrat en fibres de carbone par une barbotine contenant une résine précurseur de carbone et des grains d'oxyde métallique, par exemple SiO₂, TiO₂, ZrO₂, .... Après traitement thermique, un matériau composite C/C est obtenu contenant des grains de carbure obtenus par transformation des particules d'oxydes, avec consommation du carbone des fibres. Les exemples indiquent l'utilisation de grains d'oxyde de plusieurs microns.

Le document US 5 962 135 décrit l'imprégnation d'une préforme fibreuse de disque de frein par une solution colloïdale de silice ou de monohydroxyde d'aluminium AlO(OH) pour former du SiC ou du nitrure d'aluminium (AlN) après traitement thermique. Une dégradation des fibres de la préforme, donc des propriétés mécaniques du disque de frein est à craindre.

Le document WO 2006/29097 décrit l'imprégnation d'une préforme de disque de frein par une composition contenant un précurseur de céramique et un phosphate acide ou l'imprégnation d'un disque de frein en C/C par une suspension de particules de céramique et un phosphate acide.

Le document EP 0 507 564 décrit la réalisation d'une pièce en matériau composite type C/C par mélange de fibres carbonées, de poudre céramique et de poudre de carbone, moulage et frittage, la poudre céramique étant par exemple un oxyde tel que SiO₂, TiO₂, ZrO₂, ...., ou un nitrure. L'utilisation de poudre de ZrO₂ formée de grains d'un micron est mentionnée en exemple 2, la quantité de ZrO₂ dans le matériau composite final étant de 6,2 %.

Le document EP 0 404 571 décrit un procédé similaire à celui de EP 0 507 564 mais pour former une pièce de glissement à faible coefficient de frottement.

### Objet et résumé de l'invention

La présente invention vise à proposer un procédé permettant l'obtention d'une pièce de friction à base de matériau composite C/C à propriétés améliorées, notamment une pièce de friction présentant une faible usure aux basses températures.

Ce but est atteint grâce à un procédé selon la revendication 1.

Par composés mixtes d'oxyde, de carbure et/ou de nitrure, on entend ici des oxycarbures, des oxynitrures ou des oxycarbonitrures de composition M-Cₓ-O_{y}-N_{z} où M est un métal et x, y, z des nombres tels que y et z ne sont pas simultanément nuls.

Les particules ont une taille moyenne réduite inférieure à 250 nm, de préférence comprise entre 50nm et 150 nm.

L'introduction des particules de céramique comprend une étape d'imprégnation par une solution de type sol-gel contenant au moins un précurseur de composé céramique.

La solution de type sol-gel peut contenir en outre au moins un précurseur de carbone, par exemple du saccharose.

De préférence, l'on introduit des particules d'au moins un composé céramique représentant une fraction massique du matériau composite comprise entre 1 % et 10 %.

Selon un mode particulier de réalisation, l'introduction des particules d'au moins un composé céramique comprend une étape d'imprégnation par une solution de type sol-gel contenant au moins un précurseur d'oxyde, pour obtenir une dispersion de particules en au moins un oxyde, et un traitement de nitruration est effectué pour transformer au moins partiellement les particules d'oxyde en particules de nitrure.

Comme cela ressortira de la description détaillée faite plus loin, le procédé selon l'invention est remarquable en ce que l'apport de particules d'au moins un composé céramique, comme spécifié, permet une réduction importante de l'usure en frottement à basse température. La taille réduite des particules permet une meilleure dispersion au sein du matériau composite, pour une meilleure efficacité. Par ailleurs, l'introduction des particules de céramique à un stade intermédiaire de densification évite un contact direct avec les fibres de renfort et une éventuelle consommation du carbone des fibres lors de traitements thermiques mis en oeuvre pendant la fabrication de la pièce de friction et favorise la dispersion au sein de la matrice carbone.

### Brève description des dessins

L'invention sera mieux comprise à la lecture de la description faite ci-après, à titre indicatif mais non limitatif. Il sera fait référence aux dessins annexés sur lesquels
- la figure 1 indique des étapes successives d'un mode particulier de mise en oeuvre d'un procédé selon l'invention ;
- la figure 2 indique des étapes successives d'un autre mode particulier de mise en oeuvre d'un procédé selon l'invention ;
- la figure 3 indique des étapes successives d'un procédé hors invention ; et
- les figures 4 et 5 montrent des courbes représentant l'usure en fonction de la température pour plusieurs exemples de pièces de friction obtenues ou non selon l'invention.

### Description détaillée de modes de réalisation

Dans la description qui suit, il est plus particulièrement envisagé la réalisation de disques à base de matériau composite C/C pour des freins d'avion. Toutefois, l'invention est applicable à la réalisation d'autres pièces de friction à base de matériau composite C/C, telles que des disques de frein pour des véhicules terrestres, notamment des automobiles, et des pièces de friction autres que des disques, notamment des patins.

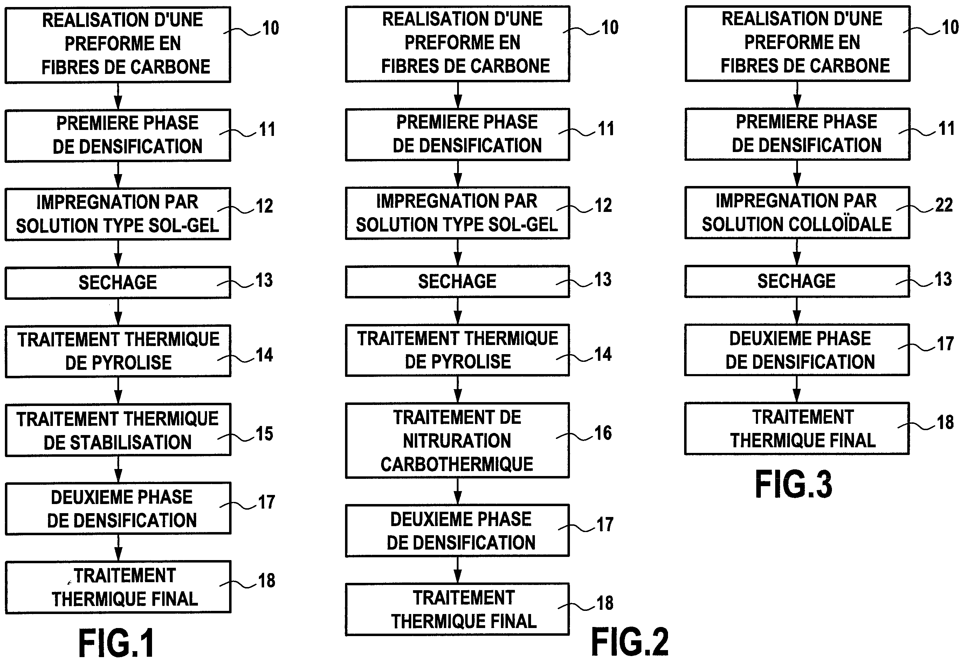

Un premier et un deuxième exemples de mise en oeuvre d'un procédé selon l'invention sont indiqués sur les figures 1 et 2.

Une première étape 10 consiste à réaliser une préforme annulaire en fibres de carbone pour disque de frein. Une telle préforme est par exemple réalisée par superposition de strates découpées dans une texture fibreuse en fibres de précurseur de carbone, liaison des strates entre elles par aiguilletage, découpe de la préforme et transformation du précurseur en carbone par traitement thermique. En variante, on peut aussi réaliser une préforme annulaire par enroulement en spires superposées d'un tissu hélicoïdal en fibres de précurseur de carbone, liaison des spires entre elles par aiguilletage et transformation du précurseur par traitement thermique. On pourra par exemple se référer aux documents US 5 792 715, US 6 009 605 et US 6 363 593. On peut aussi réaliser les préformes directement à partir de strates annulaires de texture fibreuse en fibres de carbone qui sont superposées et liées entre elles par exemple par aiguilletage.

A l'étape 11, une densification partielle par une matrice carbone est réalisée, par exemple par un processus CVI à partir d'une phase gazeuse contenant du méthane et/ou du propane. La densification par CVI est réalisée dans une enceinte à une température d'environ 1000°C et sous une pression de préférence inférieure à 5 kPa, comme cela est bien connu en soi. On pourra se référer par exemple au document US 5 904 957 déjà cité. Cette première phase de densification est réalisée de manière à combler de préférence entre 10 % et 60 % en volume de la porosité initiale de la préforme. En variante, la première phase de densification peut être réalisée par un procédé de type voie liquide ou de type caléfaction comme mentionné plus haut.

A l'étape 12, la préforme partiellement densifiée est imprégnée par un liquide formé d'une solution de type sol-gel comprenant un ou plusieurs précurseur(s) permettant la formation et la dispersion au sein de la préforme de grains ou particules de céramique de faibles dimensions, c'est-à-dire ayant une dimension moyenne inférieure à 250 nm, de préférence comprise entre 50 nm et 150 nm. La composition de la solution est déterminée pour obtenir en final au moins un composé céramique :
d'un élément choisi parmi le titane, l'yttrium, le tantale et l'hafnium,
- choisi parmi des oxydes, des nitrures et des composés mixtes d'oxyde, de carbure et de nitrure (oxynitrures, oxycarbures, carbonitrures, oxycarbonitrures),
- ne réagissant pas avec le carbone à une température inférieure à 1000°C et
- ayant un point de fusion supérieur à 1800°C,
- de manière à ne pas réagir avec le carbone du matériau composite C/C dans les conditions normales d'élaboration et d'utilisation des disques de frein et à ne pas passer à l'état liquide lors des traitements thermiques auxquels les disques de frein sont soumis pendant leur élaboration ou lors d'un freinage de détresse ou RTO ("Rejected Take-Off").

Des exemples de solutions de type sol-gel permettant d'obtenir de tels composés céramiques seront décrits plus loin. D'une façon générale, on peut utiliser au moins un précurseur d'oxyde dissout dans un solvant avec de préférence ajout d'un chélatant, un ou des oxydes ou oxycarbures étant obtenus après séchage par élimination du solvant et traitement thermique, le carbone pour formation éventuelle d'au moins un oxycarbure provenant de la matrice carbone formée lors de la première phase de densification. Au moins un nitrure, oxynitrure ou oxycarbonitrure peut être obtenu par nitruration subséquente, notamment par nitruration carbothermique.

La solution de type sol-gel peut aussi comporter un précurseur de carbone utile notamment pour compléter la matrice carbone ou fournir le carbone nécessaire à la nitruration carbothermique de manière à éviter la consommation du carbone de la matrice précédemment déposée. Comme précurseur de carbone on peut avantageusement utiliser du saccharose, étant noté que d'autres précurseurs peuvent être employés tels que la méthylcellulose, le fructose ou le glucose.

L'imprégnation par une solution de type sol-gel à un stade intermédiaire de densification du matériau composite C/C plutôt qu'au stade de la préforme fibreuse non densifiée permet une meilleure dispersion des particules de céramique dans le volume de la matrice en évitant leur confinement à l'interface fibres-matrice. En outre, une consommation éventuelle du carbone des fibres est évitée lors d'un traitement thermique réalisé pour l'élaboration du matériau composite C/C enrichi en particules de céramique, notamment lors d'un traitement de nitruration carbothermique.

A l'étape 13, un séchage est réalisé par exemple à une température de 60°C à 100°C et pendant une durée d'une à plusieurs dizaines d'heures, le séchage pouvant être réalisé en étuve.

A l'étape 14, un traitement thermique est réalisé pour transformer le ou les précurseurs en oxyde(s). Ce traitement thermique de pyrolyse peut être réalisé sous atmosphère non oxydante, par exemple sous atmosphère d'azote ou d'argon ou sous vide, à une température par exemple comprise entre 600°C et 1000°C pendant une à plusieurs dizaines d'heures. Lorsque l'on désire obtenir des particules d'oxyde(s) (figure 1) et qu'un oxyde ainsi obtenu est instable, un traitement thermique de stabilisation est de préférence réalisé (étape 15). Ce traitement de stabilisation est effectué de préférence à une température comprise entre 1000°C et 1500°C, pendant une à plusieurs heures et sous atmosphère neutre. Les conditions du ou des traitements thermiques sont choisies pour éviter la carburation totale du ou des oxydes, c'est-à-dire leur transformation complète en carbure par réaction avec le carbone de la matrice, la formation d'oxycarbures étant par contre possible dans le cadre de l'invention.

Après le traitement thermique à l'étape 14 et celui éventuel de l'étape 15, la densification par la matrice carbone est terminée lors d'une deuxième phase de densification (étape 17) qui peut être semblable ou non à la première phase de l'étape 11, par exemple avec une première phase de densification par CVI et une deuxième phase par voie liquide ou inversement.

A l'étape 18, un traitement thermique à haute température du disque de frein en composite C/C enrichi de particules de céramique peut être réalisé comme connu en soi. Un tel traitement thermique final est réalisé sous atmosphère neutre ou sous vide à une température supérieure à 1400°C.

Lorsque l'on désire obtenir des particules de nitrure, d'oxynitrure ou d'oxycarbonitrure (figure 2), après le traitement thermique à l'étape 14, un traitement de nitruration, tel qu'une nitruration carbothermique est réalisé (étape 16). Le traitement de nitruration est effectué sous atmosphère d'azote ou de gaz ammoniac, par exemple sous pression atmosphérique, pendant une à plusieurs heures et à une température fonction du composé à former, typiquement comprise entre 900°C et 1700°C.

Dans le mode de réalisation des figures 1 et 2, la densification par la matrice carbone est réalisée en deux phases séparées par les étapes d'imprégnation par une solution de type sol-gel et de traitement(s) thermique(s). On pourra réaliser la densification en plus de deux phases, des étapes successives d'imprégnation par solution de type sol-gel et de traitement(s) thermique(s) étant réalisées entre deux phases de densification à chaque intervalle entre deux phases ou seulement lors d'un ou de certains de ces intervalles.

Le procédé de la figure 3 (hors invention) se distingue de celui de la figure 1 en ce que, après la première phase de densification (étape 11), l'imprégnation à l'étape 22 est réalisée par une suspension colloïdale et non par une solution de type sol-gel comme à l'étape 12.

On utilise une solution colloïdale susceptible de laisser, après séchage et traitement thermique éventuel, des particules d'oxyde, de nitrure et/ou de composés mixtes tels que définis plus haut.

On pourra utiliser notamment une suspension colloïdale d'au moins un oxyde. Après séchage (étape 13), les traitements thermiques de pyrolyse et de stabilisation de la figure 1 sont omis sauf si un traitement thermique est nécessaire pour pyrolyser ou éliminer des additifs organiques présents dans la suspension ou pour carboniser du saccharose éventuellement ajouté à la suspension. L'on passe ensuite à la deuxième phase de densification (étape 17) et au traitement thermique final éventuel (étape 18).

Pour l'obtention de particules de nitrure ou de composé mixte comprenant un nitrure, un traitement thermique de nitruration est réalisé après séchage et avant la deuxième phase de densification, tel que celui de l'étape 16 de la figure 2.

On notera que plusieurs cycles d'imprégnation/séchage/ pyrolyse pourront être réalisés dans le cas des procédés décrits ci-avant, avec un seul traitement de stabilisation ou de nitruration, pour moduler la quantité de particules de composé(s) céramique(s) introduite.

On notera aussi que l'imprégnation pourra être réalisée par une solution de type sol-gel et par une suspension colloïdale soit simultanément, soit respectivement à différents stades de la fabrication des disques de frein.

La formation des particules de composés céramiques, à partir d'une imprégnation par une solution de type sol-gel est ici préférée en raison de sa facilité de mise en oeuvre.

Dans ce qui précède, on a décrit l'introduction de particules de composé(s) céramique(s) après un premier cycle de densification, avant la fin de la densification par la matrice carbone. Cela n'exclut toutefois pas l'introduction de particules supplémentaires de céramique après la fin de la densification.

### Exemple 1 (comparatif)

Des disques de frein d'avion en matériau composite C/C ont été fabriqués comme suit.

Des préformes fibreuses ont été réalisées par superposition et aiguilletage de strates de texture fibreuse en fibres de PAN préoxydé, précurseur de carbone, comme décrit dans le document US 5 792 715. La texture fibreuse était sous forme d'une nappe multiaxiale obtenue par superposition et aiguilletage léger de trois nappes unidirectionnelles dans des directions formant entre elles des angles de 60°. Après carbonisation du précurseur, des préformes en fibres de carbone ont été obtenues avec un taux volumique de fibres de 25 % environ (pourcentage du volume apparent de la préforme occupé par les fibres).

Chaque préforme a ensuite été densifiée par une matrice PyC obtenue par CVI, la densité finale du matériau composite étant supérieure ou égale à 1,75. La densification a été réalisée en deux phases, la première phase réduisant le taux volumique de porosité d'une valeur initiale de 75 % environ à une valeur de 35 % environ, c'est-à-dire en comblant environ 42 % de la porosité initiale des préformes. Un écroûtage des préformes partiellement densifiées a été effectué après la première phase de densification. Un traitement thermique à haute température, supérieure à 1400°C, a été réalisé au stade final.

### Exemple 2

Des préformes en fibres de carbone ont été obtenues puis soumises à une première phase de densification et à un écroûtage comme dans l'exemple 1. Après écroûtage, chaque préforme a été imprégnée par une solution de type sol-gel à base d'un précurseur d'oxyde de titane TiO₂ préparée de la façon suivante.

De façon en soi connue, on a utilisé du butoxyde de titane comme précurseur de TiO₂ dissout dans un mélange butanol/éthanol. De l'acétylacétone a été ajouté en tant qu'agent chélatant. Une solution d'acide chlorhydrique à 0,02 mole/l a été introduite dans la première solution maintenue sous agitation. Le tableau ci-dessous indique les quantités en moles des différents constituants.

| butoxyde de titane | butanol | éthanol | acétylacétone | solution HCl |
|---|---|---|---|---|
| 1 | 3 | 3 | 1 | 2 |

Après séchage en étuve à 70 °C pendant 24 heures, un traitement thermique de pyrolyse sous azote a été effectué en élevant progressivement la température jusqu'à 900 °C, transformant le butoxyde de titane en oxyde TiO₂ sous forme rutile. Celui-ci étant stable, un traitement thermique de stabilisation n'est pas requis. On a obtenu des particules de TiO₂ de dimension moyenne de 100 nm environ.

La deuxième phase de densification a été ensuite réalisée comme dans l'exemple 1.

La quantité de solution de type sol-gel a été choisie pour obtenir dans le matériau composite final, un pourcentage massique de particules de TiO₂ environ égal à 2,9 %.

### Exemple 3

On a procédé comme dans l'exemple 2 mais en ajoutant du saccharose. Le tableau ci-dessous indique les quantités en moles des différents constituants.

| butoxyde de titane | butanol | éthanol | acétylacétone | saccharose | solution HCl |
|---|---|---|---|---|---|
| 1 | 3 | 3 | 1 | 0,2 | 2 |

On a obtenu, dans le matériau composite final, des particules de TiO₂ de dimension moyenne d'environ 100 nm représentant un pourcentage massique d'environ 2,6 % dans le matériau composite final.

### Exemple 4

On a procédé comme dans l'exemple 2 mais en faisant suivre le traitement de pyrolyse par un traitement de nitruration carbothermique réalisé sous azote à une température de 1200°C pendant 4 heures afin d'obtenir des particules de nitrure de titane (TiN).

On a obtenu des particules de dimension moyenne d'environ 50 nm représentant un pourcentage massique d'environ 2,5 % dans le matériau composite final.

### Exemple 5

On a procédé comme dans l'exemple 3, mais en faisant suivre le traitement de pyrolyse par un traitement de nitruration carbothermique réalisé sous azote à une température de 1200°C pendant 4 heures afin d'obtenir des particules de nitrure de titane (TiN).

On a obtenu des particules de dimension moyenne d'environ 50 nm représentant un pourcentage massique d'environ 2,5 % dans le matériau composite final.

### Exemple 6

Des préformes en fibres de carbone ont été obtenues puis soumises à une première phase de densification et à un écroûtage comme dans l'exemple 1. Après écroûtage, chaque préforme a été imprégnée par une solution de type sol-gel à base d'un précurseur d'oxyde d'yttrium Y₂O₃ préparée de la façon suivante.

On a utilisé du nitrate d'yttrium comme précurseur de Y₂O₃ dissout dans de l'eau. De l'acide acétique a été ajouté en tant qu'agent chélatant. Le tableau ci-dessous indique les quantités en moles des différents constituants.

| nitrate d'yttrium | eau distillée | acide acétique |
|---|---|---|
| 1 | 25 | 1 |

Après séchage en étuve à 90°C pendant 48 heures, un traitement thermique de pyrolyse sous azote a été effectué en élevant progressivement la température jusqu'à 900°C, transformant le nitrate d'yttrium en oxyde Y₂O₃. Celui-ci étant stable, un traitement thermique de stabilisation n'est pas requis. On a obtenu des particules de Y₂O₃ de dimension moyenne de 50 nm.

La deuxième phase de densification a ensuite été réalisée comme dans l'exemple 1.

La quantité de solution de type sol-gel a été choisie pour obtenir, dans le matériau composite final, un pourcentage massique de Y₂O₃ environ égal à 2,7 %.

### Exemple 7

On a procédé comme dans l'exemple 6 mais en ajoutant du saccharose dans l'eau distillée avant dissolution du nitrate d'yttrium. Le tableau ci-dessous indique les quantités en moles des différents constituants.

| nitrate d'yttrium | eau distillée | saccharose | acide acétique |
|---|---|---|---|
| 1 | 25 | 0,3 | 1 |

On a obtenu des particules de Y₂O₃, de dimension moyenne de 50 nm, la quantité de ces particules dans le matériau composite final représentant un pourcentage massique d'environ 2,7 %.

### Essais

Les disques des exemples 1 à 7 ont été évalués tribologiquement par simulation de freinages. Par rapport à des dimensions usuelles de disques de frein d'avion, les disques utilisés étaient à échelle réduite avec un diamètre extérieur de 144 mm, un diamètre intérieur de 98 mm et une épaisseur de 14 mm.

Des énergies massiques croissantes de 16 à 500 kJ/kg ont été appliquées en imposant des vitesses initiales de 521 à 2840 tr/min et une pression de freinage de 3,2 bars.

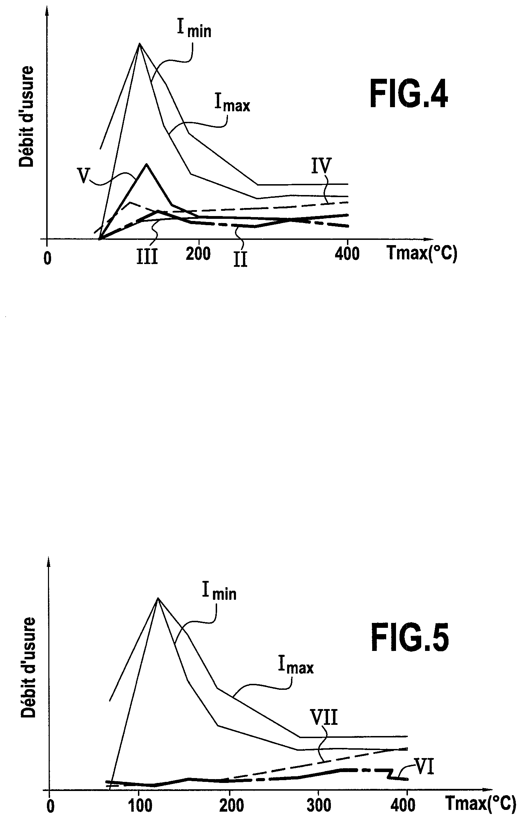

Les courbes des figures 4 et 5 représentent le débit d'usure (diminution d'épaisseur en fonction du temps) par face frottante en fonction de la température mesurée par sonde à 1 mm au-dessous de la face frottante pour les disques des exemples 1 à 11.

Sur les figures 4 et 5, les courbes Iₘᵢₙ et Iₘₐₓ représentent l'enveloppe des résultats obtenus avec des disques selon l'exemple comparatif 1.

Sur la figure 4, les courbes II, III, IX et V représentent en outre les résultats obtenus avec des disques des exemples 2, 3, 4 et 5, respectivement.

Sur la figure 5, les courbes VI et VII représentent les résultats obtenus avec des disques des exemples 6 et 7, respectivement.

On constate, dans tous les cas, une très forte diminution de l'usure à basse température, notamment en deçà de 200°C, avec les disques conformes à l'invention.
dimensions usuelles de disques de frein d'avion, les disques utilisés étaient à échelle réduite avec un diamètre extérieur de 144 mm, un diamètre intérieur de 98 mm et une épaisseur de 14 mm.

Des énergies massiques croissantes de 16 à 500 kJ/kg ont été appliquées en imposant des vitesses initiales de 521 à 2840 tr/min et une pression de freinage de 3,2 bars.

Les courbes des figures 4 et 5 représentent le débit d'usure (diminution d'épaisseur en fonction du temps) par face frottante en fonction de la température mesurée par sonde à 1 mm au-dessous de la face frottante pour les disques des exemples 1 à 7.

Sur les figures 4 et 5, les courbes Iₘᵢₙ et Iₘₐₓ représentent l'enveloppe des résultats obtenus avec des disques selon l'exemple comparatif 1.

Sur la figure 4, les courbes II, III, IV et V représentent en outre les résultats obtenus avec des disques des exemples 2, 3, 4 et 5, respectivement.

Sur la figure 5, les courbes VI et VII représentent les résultats obtenus avec des disques des exemples 6 et 7, respectivement.

On constate, dans tous les cas, une très forte diminution de l'usure à basse température, notamment en deçà de 200°C, avec les disques conformes à l'invention.

## Revendications

1. Procédé de fabrication d'une pièce de friction à base de matériau composite carbone/carbone, comprenant la réalisation d'une préforme fibreuse en fibres de carbone, la densification de la préforme par une matrice en carbone, la densification étant réalisée en plusieurs cycles séparés, et, au cours du processus de fabrication, l'introduction dans le matériau composite de particules de céramique dispersées au sein de la pièce,
**caractérisé en ce que** l'introduction de particules de composé céramique est réalisée après un premier cycle de densification, avant la fin de la densification par la matrice carbone, l'introduction des particules de composé céramique comprenant une étape d'imprégnation de la préforme partiellement densifiée par une solution de type sol-gel contenant au moins un précurseur de composé céramique suivie d'un séchage, puis d'un traitement thermique de transformation dudit au moins un précurseur en oxyde(s) sans transformation complète du ou des oxydes en carbure par réaction avec le carbone de la matrice,
et **en ce que** les particules introduites ont une taille moyenne inférieure à 250 nm et sont en au moins un composé céramique d'un élément choisi parmi le titane, l'yttrium, le tantale et l'hafnium, le composé céramique étant choisi parmi des oxydes, des nitrures et des composés mixtes d'oxyde, de carbure et/ou de nitrure ne réagissant pas avec le carbone à une température inférieure à 1000°C et ayant un point de fusion supérieur à 1800°C, un traitement thermique final de la pièce de friction enrichie des particules céramiques étant réalisé sous atmosphère neutre ou sous vide à une température supérieure à 1400°C.

2. Procédé selon la revendication 1, **caractérisé en ce que** la solution de type sol-gel contient en outre au moins un précurseur de carbone.

3. Procédé selon la revendication 2, **caractérisé en ce que** la solution de type sol-gel contient du saccharose.

4. Procédé selon l'une quelconque des revendications 1 à 3, **caractérisé en ce que** l'on introduit des particules d'au moins un composé céramique représentant une fraction massique du matériau composite comprise entre 1 % et 10 %.

5. Procédé selon l'une quelconque des revendications 1 à 4, **caractérisé en ce que** l'introduction des particules d'au moins un composé céramique comprend une étape d'imprégnation par une solution de type sol-gel contenant au moins un précurseur d'oxyde, pour obtenir une dispersion de particules en au moins un oxyde, et un traitement de nitruration est effectué pour transformer au moins partiellement les particules d'oxyde en particules de nitrure.

## Patentansprüche

1. Verfahren zur Herstellung eines Reibteils auf der Basis von Kohlenstoff/Kohlenstoff-Verbundwerkstoff, umfassend die Herstellung eines Faservorformlings aus Kohlenstofffasern, die Verdichtung des Vorformlings durch eine Kohlenstoffmatrix, wobei die Verdichtung in mehreren getrennten Zyklen durchgeführt wird, sowie, während des Herstellungsprozesses, das Einbringen von Keramikteilchen, die innerhalb des Teils verteilt sind, in den Verbundwerkstoff,
**dadurch gekennzeichnet, dass** das Einbringen von Teilchen aus Keramikverbindung nach einem ersten Verdichtungszyklus vor dem Ende der Verdichtung durch die Kohlenstoffmatrix durchgeführt wird, wobei das Einbringen der Teilchen aus Keramikverbindung einen Schritt des Imprägnierens des teilweise verdichteten Vorformlings durch eine Lösung vom Sol-Gel-Typ, die wenigstens einen Vorläufer einer Keramikverbindung enthält, umfasst, an den sich ein Trocknen, dann eine Wärmebehandlung zum Umwandeln des wenigstens einen Vorläufers in Oxid(e) ohne vollständige Umwandlung des Oxids oder der Oxide in Carbid durch Reaktion mit dem Kohlenstoff der Matrix anschließt,
und dass die eingebrachten Teilchen eine mittlere Größe von weniger als 250 nm aufweisen und aus wenigstens einer Keramikverbindung eines aus Titan, Yttrium, Tantal und Hafnium ausgewählten Elements bestehen, wobei die Keramikverbindung aus Oxiden, Nitriden und Mischverbindungen aus Oxid, Carbid und/oder Nitrid ausgewählt ist, die bei einer Temperatur unterhalb von 1000 °C nicht mit dem Kohlenstoff reagieren und einen Schmelzpunkt oberhalb von 1800 °C aufweisen, wobei eine abschließende Wärmebehandlung des mit den Keramikteilchen angereicherten Reibteils unter neutraler Atmosphäre oder unter Vakuum bei einer Temperatur oberhalb von 1400 °C durchgeführt wird.

2. Verfahren nach Anspruch 1, **dadurch gekennzeichnet, dass** die Lösung vom Sol-Gel-Typ ferner wenigstens einen Kohlenstoffvorläufer enthält.

3. Verfahren nach Anspruch 2, **dadurch gekennzeichnet, dass** die Lösung vom Sol-Gel-Typ Saccharose enthält.

4. Verfahren nach einem der Ansprüche 1 bis 3, **dadurch gekennzeichnet, dass** Teilchen aus wenigstens einer Keramikverbindung eingebracht werden, die einen Massenanteil des Verbundwerkstoffs im Bereich zwischen 1 % und 10 % darstellen.

5. Verfahren nach einem der Ansprüche 1 bis 4, **dadurch gekennzeichnet, dass** das Einbringen der Teilchen aus wenigstens einer Keramikverbindung einen Schritt des Imprägnierens mit einer wenigstens einen Oxidvorläufer enthaltenden Lösung vom Sol-Gel-Typ umfasst, um eine Dispersion von Teilchen aus wenigstens einem Oxid zu erhalten, und eine Nitrierungsbehandlung durchgeführt wird, um die Oxidteilchen wenigstens teilweise in Nitridteilchen umzuwandeln.

## Claims

1. A method of fabricating a friction part based on carbon/carbon composite material, comprising making a fiber preform out of carbon fibers, densifying the preform with a carbon matrix, densification being performed in a plurality of separate stages, and during the fabrication process, introducing in the composite material ceramic particles dispersed in the part, **characterized in that** the introduction of ceramic compound particles takes place after a first stage of densification, before the end of densifying with the carbon matrix, the introduction of ceramic compound particles comprising a step of impregnating the partially densified preform with a sol-gel type solution containing at least one ceramic compound precursor followed by a drying, then followed by a heat treatment for transforming said at least one precursor into oxide(s) without complete transformation of the oxide(s) into carbide by reaction of the carbon of the matrix, and **in that** the introduced particles have an average size of less than 250 nm and one made of at least one ceramic compound of an element selected from titanium, yttrium, tantalum, and hafnium, the ceramic compound being selected from oxides, nitrides, and mixed oxide, carbide, and/or nitride compounds that do not react with carbon at a temperature lower than 1000°C and that have a melting point higher than 1800°C, a final heat treatment of the friction part enriched with ceramic particles being carried under neutral atmosphere or under vacuum at a temperature greater than 1400°C.

2. A method according to claim 1, **characterized in that** the sol-gel type solution also contains at least one carbon precursor.

3. A method according to claim 2, **characterized in that** the sol-gel type solution contains saccharose.

4. A method according to anyone of claims 1 to 3, **characterized in that** particles of at least one ceramic compound are introduced to represent a percentage by weight in the composite material lying in the range 1% to 10%.

5. A method according to anyone of claims 1 to 4, **characterized in that** the introduction of particles of at least one ceramic compound comprises a step of impregnation by a sol-gel type solution containing at least one oxide precursor, to obtain a dispersion of particles of at least one oxide, and nitriding treatment is performed to transform the oxide particles into nitride particles, at least in part.
